# EUROPEAN PATENT APPLICATION

(11) **EP 1 257 046 A2**
(43) Date of publication of application: **13.11.2002**
(21) Application number: 02010431.1
(22) Date of filing: 08.05.2002
(51) Int. Cl.: H02M 3/335

(54) **Switching power supply apparatus**

(30) Priority: 10.05.2001 JP 2001179372; 07.05.2002 JP 2002132048
(71) Applicant: FIDELIX Y.K., Kiyose-shi, Tokyo 204-0022 (JP)
(72) Inventor: Nakagawa, Shin, Kiyose-shi, Tokyo 204-0022 (JP)
(74) Representative: Staudt, Hans-Peter, Dipl.-Ing.

(57) **Abstract**

The present invention relates to an isolated-type switching power supply apparatus, which includes a power supply, a transformer being connected to said power supply, a switching element for switching an electric current going through a primary coil of the transformer so that energy generated on the primary side of the transformer is sent to the secondary side in accordance with the operation of the switching element. The present invention has a modulating circuit for modulating an output on the secondary side of said transformer, a transmitting rout for transmitting an output of the modulating circuit to the primary side of the transformer, a demodulating circuit for demodulating the output transferred through the transferring rout; and the controlling circuit controls the switching element in accordance with an output of the demodulating circuit and the controlling circuit is disposed on the primary side of the transformer.

## Description

### Background of the Invention

### 1) Field of the Invention

The present invention relates to an isolated type switching power supply apparatus whereby energy generated on the primary side is transferred to the secondary side in a non-contacted manner. The present invention can suitably be used in chargers used in instruments such as shavers, cellular phones, notebook-type personal computers, cordless electric equipment, etc.

### 2) Related Art Statement

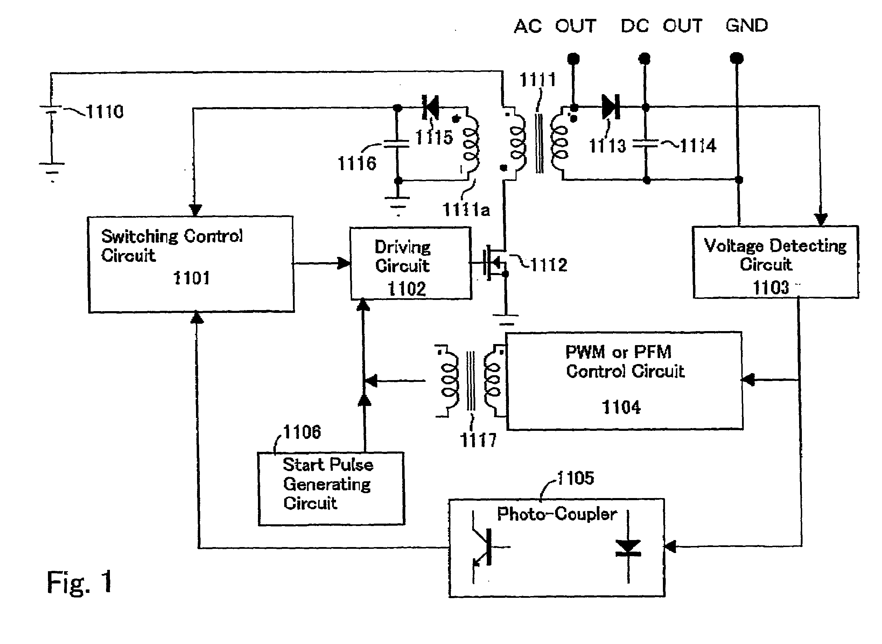

Fig. 1 is a circuit diagram showing the construction of conventional switching power supply apparatuses. As shown in Fig. 1, an output of a DC power supply 1110 is switched by a switching element 1112 via a primary coil of a transformer 1111; then transferred to the secondary side of the transformer 1111 in accordance with an operation of the switching element 1112. The output of the secondary side of the transformer 1111 is rectified by a diode 1113 and smoothed by a capacitor 1114 to be outputted. The numerical reference 1101 represents a switching control circuit for the switching element 1112 and the numerical reference 1102 represents a driving circuit for the switching element 1112.

In this apparatus, a voltage detecting circuit 1103 is provided at the downstream of the capacitor 1114 to detect the output voltage on the secondary side of the transformer 1111; the detected voltage is sent to the primary side, on the basis of which the operation of the switching element 1112 is controlled. That is to say, when the output voltage is high the ON time of the switching element 1112 is controlled to be shorter, and when the output voltage is low it is controlled to be longer, so that the output voltage of the apparatus can be kept constant.

There are three conventional routes mentioned below as a means to transfer the voltage detected in the voltage detecting circuit 1103 to the primary side of the transformer 1111.

The first route is that so-called tertiary coil is provided in the transformer 1111 and the voltage appearing at the tertiary coil is assumed as the voltage of the secondary side of the transformer; then the switching element 1112 is controlled in accordance with the variation of the voltage at the tertiary coil. In Fig. 1, the voltage appearing at the tertiary coil 1111a is assumed as the voltage at the secondary side of the transformer 1111; an output of the tertiary coil 1111a is inputted to the switching control circuit 1101 after being rectified with the diode 1115 and being smoothed with the capacitor 1116. However, in such a construction, there is a problem that the voltage on the secondary side of the transformer 1111 is not correctly reflected at the tertiary coil 1111a.

The second route is that; a PWM (Pulse Width Modulation) control circuit or a PFM (Pulse Frequency Modulation) control circuit is provided at the secondary side of the transformer and the output of the PWM or PFM control circuit is sent back to the primary side via another transformer to directly control the switching element. In Fig. 1, the output of the voltage detecting circuit 1103 is modulated by the PWM or PFM control circuit 1104; the pulse output of the circuit 1104 is sent to the driving circuit 1102 via a pulse transformer 1117, which is separately provided from the switching transformer 1111.

However, according to this construction, when the power supply 1110 is turn ON, the apparatus does not start up; therefore it is necessary to provide a pulse generating circuit 1106 on the primary side of the transformer 1111 for starting up the apparatus. Further, it is required to provide some circuit for re-starting the apparatus in a case where the switching operation is stopped due to the fact that an over current is generated on the load or the load is short-circuited.

The third route is that the output of the secondary side is transferred to the primary side via a photo-coupler. In Fig. 1, such an arrangement is shown that the output of the voltage detecting circuit 1103 is sent to the switching control circuit 1101 on the primary side via the photo-coupler 1105. However, according to this construction, it is sometimes difficult to conduct a correct controlling of the switching element because dirt adhering on the photo-coupler or the variation per hour of the photo-coupler per se causes the output of the photo-coupler 1105 to vary.

### Summary of the Invention

The present invention has for its purpose to provide a switching power supply apparatus where the voltage on the secondary side can correctly be reflected on the primary side, no circuit for starting-up is required and even when a photo-coupler is used to relay the output on the secondary side to the primary side a switching control can be available without being influenced by dirty adhering on the photo-coupler or the variation per hour of the photo-coupler.

The present invention further has a purpose that even when the energy appearing on the primary side is assumed to be the same as that on the secondary side, the output on the secondary side can correctly be reflected on the primary side, so that a correct switching control can be conducted.

In order to carry the purpose out, an isolated-type switching power supply apparatus according to the first invention wherein a power supply, a transformer being connected to the power supply, a switching means for switching the electric current going through the primary coil of said transformer are provided and wherein energy generated on the primary side of the transformer is sent to said secondary side in accordance with an operation of said switching means, comprising:
a modulating means for modulating an output of said secondary side of said transformer;
a transferring means for transferring an output of said secondary side of said transformer to the primary side;
a demodulating circuit for demodulating the output transferred by said transferring means; and
a switching control circuit for controlling an operation of said switching means;
wherein said switching control circuit controls said switching means in accordance with an output of said demodulating circuit; and wherein said switching control circuit is provided on the primary side.

In this manner, according to the switching power supply apparatus of the first invention, an output on the secondary side of the transformer is sent to the primary side after being modulated by the modulating means, which is provided on the secondary side. Therefore, the output of the secondary side can appear on the primary side under the condition that the output of the secondary side is not apt to be influenced by switching signals, which have large energy. Further, since the switching control circuit is provided on the primary side, no pulse generating circuit for starting up the apparatus is required. Furthermore, since the output on the secondary side is sent to the primary side after being modulated, even when a photo-coupler is used as the transferring means the signal representing the output is not apt to be influenced by dirty adhering on the photo-coupler or the variation per hour of the photo-coupler itself.

As the transferring means, the switching transformer itself, which works to transfer the switching signal from the primary side to the secondary side, can be used. In addition, a photo-coupler can be preferably used, or a second transformer, which is provided separately from the switching transformer, can be also used. Furthermore, when the output on the secondary side is modulated with a high frequency, an inductor circuit being composed of an inductor on the primary side and an inductor on the secondary side can be preferably used.

Further, the switching power supply apparatus according to the first invention may be arranged such that the modulating means comprises a first modulating circuit for modulating an output on the secondary side of said transformer and a second modulating circuit for further modulating an output of said first modulating circuit, and the demodulating means comprises a first demodulating circuit for demodulating an output of said second modulating circuit which is transferred with the aid of said transferring means and a second demodulating circuit for further demodulating an output of said second demodulating circuit.

A more precise switching operation can be expected by conducting the modulation and demodulation in a doubled manner as mentioned above. It should be noted that if a high modulating frequency, i.e. 10 times or more of the switching frequency, for example, is used for modulating, this modulated signal will have the nature of radio waves. Therefore, it could be possible to easily send such modulated signal to the primary side even if the modulating circuit on the secondary side and the demodulating circuit on the primary side are separated from each other. In this case, the above-mentioned inductor circuit can be preferably used as the transferring means.

Furthermore, it may be possible to arrange such that the apparatus conducts a soft switching operation. In this case, the control of the switching element becomes more precise.

It may be also possible to have a simultaneously rectifying means using an FET on the secondary side of the transformer.

Any modulating method can be preferably used in the modulating circuit, such as amplitude modulation, frequency modulation, phase modulation, pulse width modulation, pulse frequency modulation, pulse amplitude modulation, pulse period modulation, pulse code modulation, spread spectrum modulation, quadrature modulation, or other modulation mixing the above.

The switching power supply apparatus according to the second invention, wherein a power supply, a transformer being connected to the power supply, a switching means for switching the electric current going through the primary coil of said transformer are provided and wherein energy generated on the primary side of the transformer is sent to said secondary side in accordance with an operation of said switching means, comprising:
a magnetic energy detecting means for detecting a magnetic energy of said transformer;
a switching controlling means for controlling said switching means on the basis of a variation of an energy amount which is detected by said magnetic energy detecting means,
a load regulation correcting means for detecting an input electric current of the apparatus and for correcting the load regulation on the basis of the detected input electric current, and/or, a line regulation correcting means for detecting an input voltage of the apparatus and for correcting the line regulation on the basis of the detected input voltage.

In this manner, since the load regulation correcting means and/or a line regulation correcting means is/are provided, even when the input voltage is too high or the input electric current is great, a preferable switching operation can be available. Particularly, in case that the required specification is not so strict that it is not necessary to have a modulating circuit on the secondary side, or in case that the magnetic energy on the primary side of the transformer is sent to the switching control means directly or after being rectified and smoothed, a preferable switching control can be conducted by carrying out the correction of the load regulation and/or the line regulation.

The magnetic energy on the transformer can be detected by a tertiary coil provided on the primary side of the switching transformer or through a second transformer which is provided separately from the switching transformer.

The apparatus according to the second invention can also be arranged to conduct a soft-switching operation. In addition, it may be possible to provide a simultaneous rectifying means using an FET on the secondary side of the transformer.

Further, it should be noted that the input electric current for use in correcting the load regulation can be substituted by detecting a duty ratio of the switching means.

### Brief Explanation of the Drawings

Fig. 1 is a circuit diagram showing a construction of the conventional switching power supply apparatuses:
Fig. 2 is a circuit diagram depicting a construction of the first embodiment according to the present invention.
Fig. 3 is a circuit diagram depicting a construction of the second embodiment according to the present invention.
Fig. 4 is a circuit diagram depicting a construction of the third embodiment according to the present invention.
Fig. 5 is a circuit diagram depicting a construction of the fourth embodiment according to the present invention.
Fig. 6 is a circuit diagram depicting constructions of the fifth and sixth embodiments according to the present invention, respectively.

### Detailed Explanation of the Embodiments

The detail of the embodiments of the switching power supply apparatus according to the invention will be explained, referring to the attached drawings.

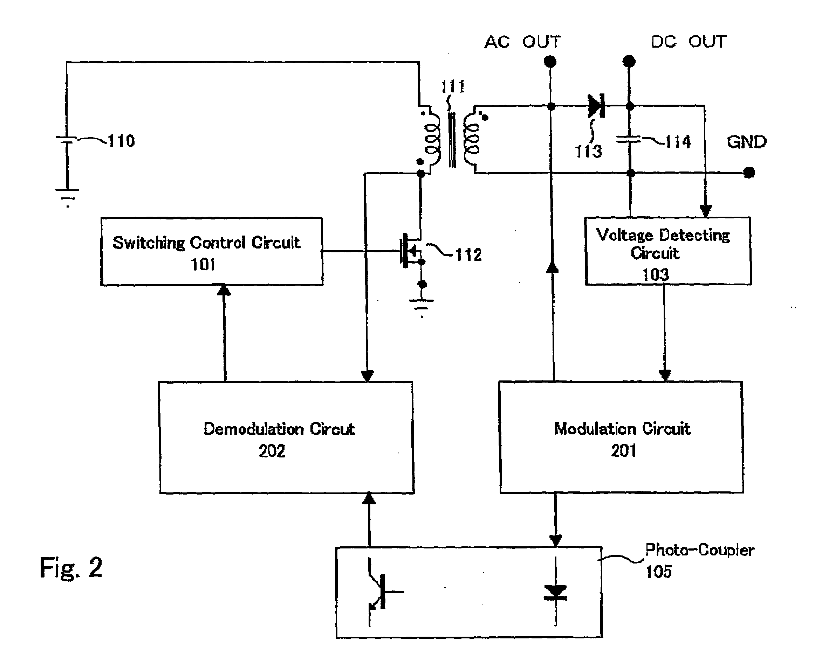

Fig. 2 is a circuit diagram showing a first embodiment of the present invention. An output of a DC power supply 110 is switched by a switching element 112 via a primary coil of a transformer 111; then transferred to the secondary side of the transformer 111 in accordance with an operation of the switching element 112. The output of the secondary side of the transformer 111 is rectified by a diode 113 and smoothed by a capacitor 114 to be outputted. The numerical reference 101 represents a switching control circuit for controlling the operation of the switching element 112.

In the first embodiment, a modulation circuit 201 is provided on the secondary side of a switching transformer 111. The output of a voltage detecting circuit 103 for detecting a voltage on the secondary side of the switching transformer 111 is modulated in the circuit 201 and then transferred to the primary side of the transformer 111. On the primary side of the transformer 111, a demodulation circuit 201 is provided, where the control signal sent from the modulation circuit 201 is demodulated to be inputted into the switching controlling circuit 101.

Two routes, i.e. through the switching transformer 111 (first route) or through the photo-coupler 105 (second route) can be used to transfer the modulated signal on the secondary side to the primary side of the transformer 111.

In the first route, the output signal of the modulating circuit 201 is injected from the secondary coil of the switching transformer 111 into the primary coil thereof; the output from the primary coil is then inputted into the demodulation circuit 202. Since the output signal is modulated, the signal is not apt to be interrupted by the switching signals having large energy that go from the primary side to the secondary side of the transformer 111, and therefore, the voltage on the secondary side can correctly appear on the primary side. Further, since the switching control circuit 101 for the switching clement 112 is arranged on the primary side, it is not necessary in addition to provide a pulse generator for the purpose of starting the apparatus up.

The second transferring route is to use a photo coupler 105. According to the invention, the pulse output is transferred to the primary side after being modulated in the modulating circuit 201 on the secondary side; therefore, even if a photo coupler is used as the transferring means, the output on the secondary side correctly appears on the primary side under the condition that the output is not apt to be influenced by dirt adhering on the photo-coupler or time variation per hour thereof.

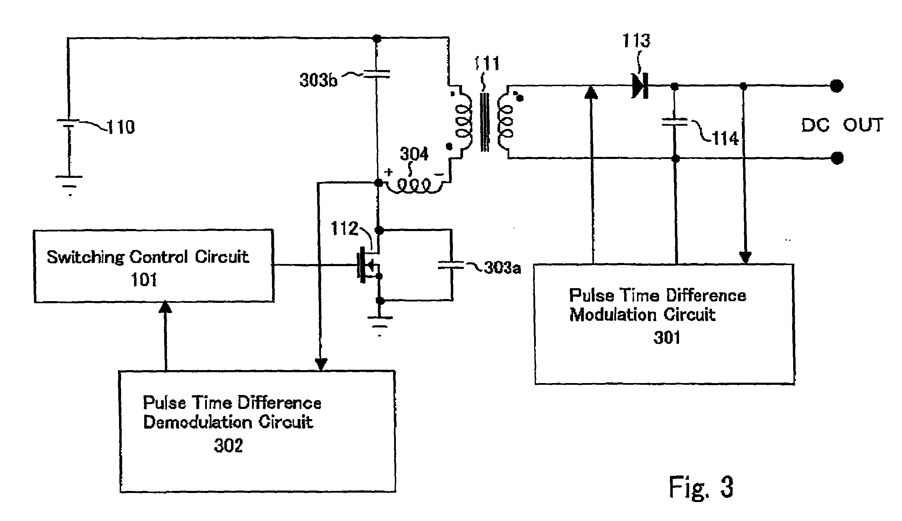

Fig. 3 is a circuit diagram depicting a construction of the second embodiment of the present invention. In the second embodiment, resonate capacitors 303a and 303b are provided on the primary side of the transformer 111 and in parallel with the switching element 112, respectively, to constitute of a fly-back voltage resonate type converter.

As the same as in the first embodiment, a modulation circuit 301 is provided on the secondary side and a demodulation circuit 302 is on the primary side. For the modulation circuit 301, a pulse period difference modulation circuit is used; and for the demodulation circuit 302, a pulse period difference demodulation circuit is used. The output of the pulse period difference modulation circuit 301 is injected from the secondary coil of the transformer 111 to the primary coil thereof to be inputted to the demodulation circuit 302.

This converter operates as a voltage resonate converter where it resonates for about half cycle of the OFF time of the switching element 112. In this embodiment, the OFF time of the switching element 112 is substantially fixed and then the ON time thereof is varied.

It should be noted that the energy collected in a leaked inductance 304, which is caused by the space between cores when the power is transferred from the primary side to the secondary side, can be regenerated and reused. Further, since a soft switching operation is conducted here, the modulated signal injected from the pulse period difference modulation circuit 301 is not apt to be interrupted.

The apparatus shown in Fig. 3 is constructed as a voltage resonate type fly-back converter, however, it may be possible to apply the present invention to forward converters, half bridge converters, or the others, Furthermore, an active clamp, where a sub-switch is provided in a forward converter, or a resonate-type voltage-current soft switching apparatus, is also applicable.

It should be noted that modulating method with a time width signal or a time difference signal corresponding to the output on the secondary side, such as modulating with time width of continued pulses, modulating with time difference between two pulses or two pulse groups, and modulating with time difference between the ON time or the OFF time of the rectifying diode on the secondary side and the pulse or the pulse group, can be used.

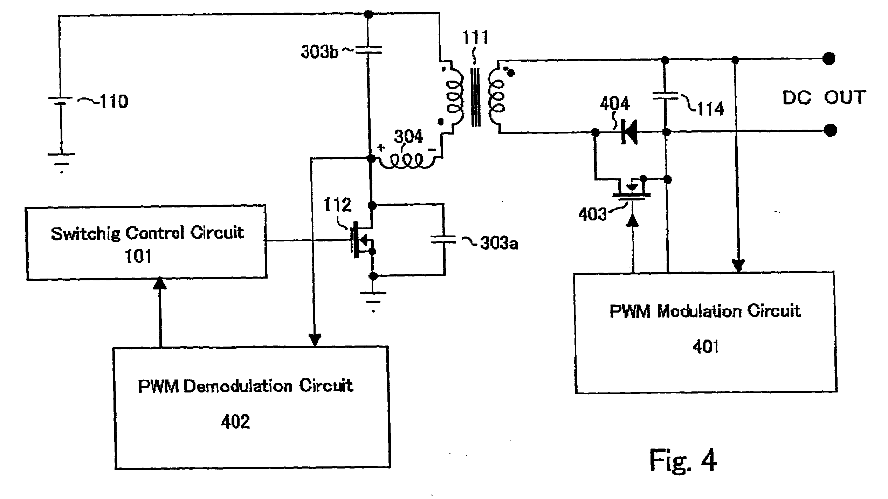

Fig. 4 is a circuit diagram illustrating the third embodiment of the present invention. In the third embodiment, an FET 403 is provided in parallel to the diode 404, which is a rectifying means on the secondary side, to conduct a simultaneous rectifying. That is to say, the output of the PWM modulation circuit 401 is sent to the primary side at a conductive timing of the gate of the FET 403.

The diode 404 is a body diode or an external diode. When the diode 404 is conducted, a gate voltage of the FET 403 is applied with a predetermined timing; during the time when the gate voltage is applied, the modulated signal generate in the PWM modulating circuit 401 is sent to the primary side. In accordance with the ON-OFF operation of the FET 403, the voltage appearing on the primary side is slightly varied, and then the little variation of the voltage is detected in the PWM demodulating circuit 402 and demodulated there to control the switching element 112.

The PWM modulation can be done during the time when the gate of the FET 403 is ON, or from the timing when the diode 404 is turned ON to the timing when the gate of the FET 403 is turned ON, or from the time when the gate of the FET 403 is turned OFF to the time when the diode 404 is turned OFF.

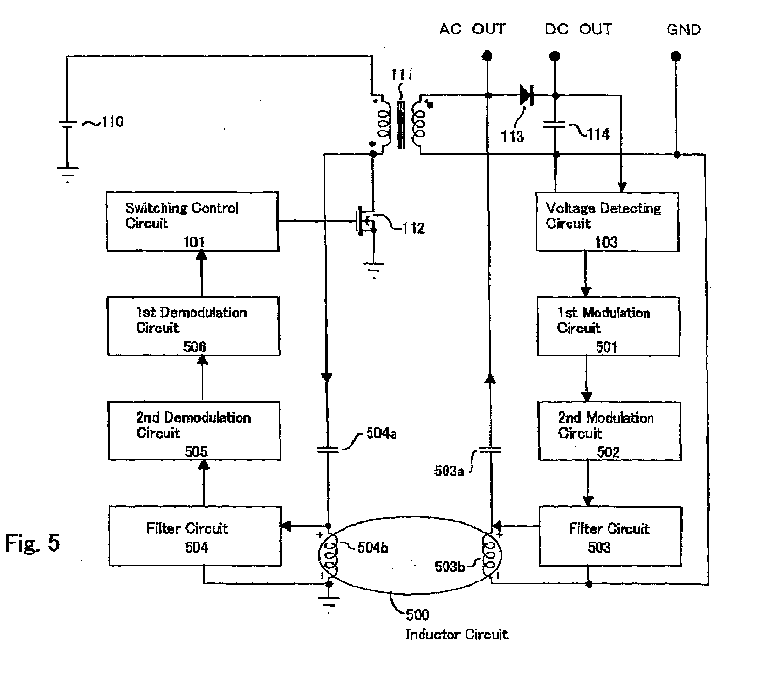

Fig. 5 is a circuit diagram representing a construction of the fourth embodiment according to the invention. In the fourth invention, the switching control signal is modulated with a frequency which is different from the switching frequency.

As shown in Fig. 5, in the fourth embodiment, the output of the secondary side is modulated twice and the double modulated signal is sent to the primary side; on the primary side the transferred modulated signal is demodulated twice. That is to say, a voltage on the secondary side detected by the voltage detecting circuit 103 is AM modulated with a frequency of, for instance, about 15kHz in the first modulating circuit 501 and then FM modulated in the second modulating circuit 502 with a frequency of about 10MHz. The output of the second modulating circuit 502 is sent to the primary coil of the transformer 111 via a filter circuit 503, a capacitor 503a and the secondary coil of the transformer 111.

On the primary side, the output of the primary coil of the transformer 111 is supplied to the second demodulating circuit 505 via a capacitor 504a and a filter circuit 504; then FM demodulated in the second demodulating circuit 505 and then supplied to the first demodulating circuit 506 to be AM demodulated. The output of the first demodulating circuit 506 corresponds to the output voltage on the secondary side. The switching control circuit 101 controls the switching element 112 in accordance with the output voltage of the first demodulating circuit 506, so that the operation of the element 112 becomes more correct.

It should be noted that the output of the capacitor 503a on the secondary side may be transferred to the primary side via the tertiary coil provided on the secondary side of the transformer 111, or may be transferred via the fourth coil which is further provided on the primary side of the transformer 111. The apparatus also may be arranged to modulate and demodulate only once, as shown in Fig. 2 or 3.

When the output on the secondary side is modulated with a high frequency, the modulated output would have a nature like a radio wave. Therefore, even when the distance between the modulating circuit and the demodulating circuit is large, the control signal could be preferably transferred. In this case, an inductor circuit as shown by the numerical reference 500 in Fig. 5 can be preferably used as the transferring means. The inductor circuit 500 is composed of a micro inductor 503b which is provided on the output side of the filter circuit 503; and a micro inductor 504b, which is provided on the input side of the filter circuit 504; a leaked magnetic flux generated in this circuit 500 may be used to transfer the modulated output to the primary side. In this case, the modulating frequency, which is about 10 times of the switching frequency or more, is preferably used to modulate the modulated signal on the secondary side.

The photo-coupler shown in Fig. 2 can be substituted with the inductor circuit 500 to transfer the output on the secondary side to the primary side.

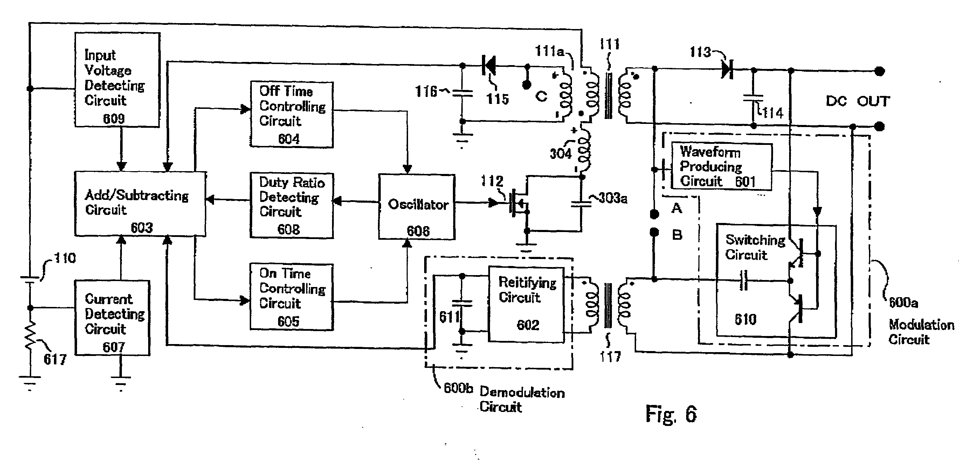

Fig. 6 is a circuit diagram showing the fifth embodiment of the present invention. In the fifth embodiment, a second transformer 117 is provided separately from the switching transformer 111 to transfer the modulated signal on the secondary side to the primary side.

More concretely, on the secondary side of the transformer 111, a modulation circuit 600a, which is composed of a waveform producing circuit 601 and a switching circuit 610, is arranged; in the modulation circuit 600a, a pulse amplitude modulated signal is produced in accordance with the output of the secondary side; the modulated signal is transferred to the primary side via the second transformer 117. On the primary side, a demodulation circuit 600b, which is composed of a rectifying circuit 602 and a smoothing circuit 611 is provided, to demodulate the output of the second transformer 117, so that the operation of the switching clement 112 is controlled by the demodulated signal.

The switching circuit 610 in the modulation circuit 600a obtains the DC output on the secondary side of the transformer 111 and drives the voltage appearing on the secondary side (left side in the drawing) of the second transformer 117. The driving signal of the switching circuit 610 is supplied there from the secondary coil of the first transformer 111 via the waveform producing circuit 601. As a result, a pulse voltage on the secondary side of the first transformer 111, which is almost proportional to the output voltage, is supplied to the secondary side of the second transformer 117. This pulse voltage is sent to the primary coil of the second transformer (left side in the drawing), then rectified in the rectifying circuit 602 and smoothed by the smoothing capacitor 611, and then demodulated. Therefore, the demodulated signal is also proportional to the direct output voltage of the first transformer 111.

In case that the required specification is not so strict, it may be possible to arrange such that the waveform generating circuit 601 and the switching circuit 610 are omitted and the points A and B in Fig. 6 are directly connected so as to directly supply the output of the first transformer 111 to the second transformer 117. Rough controlling is available even only using the demodulated signal supplied from the demodulating circuit 600b, i.e. a signal from the rectifying circuit 601 and the smoothing circuit 611.

Next, a sixth embodiment according to the present invention will be explained. In the sixth embodiment, a load regulation correcting circuit and/or a line regulation correcting circuit is/are provided on the primary side to obtain a high performance.

The load regulation correcting circuit will be explained first. When load current increases, the output voltage decreases. In such a case, a load regulation should be corrected. In the sixth embodiment, a current detecting circuit 607 is provided to detect an input current of the appratus; the detected input current is supplied to the add and subtracting circuit 603, where the detected input current is subtracted from the output of the demodulating circuit 600b. The output of the circuit 603 is further modulated with the aid of an ON time controlling circuit 605 to control the output of an oscillator 606. The load regulation can be corrected by increasing ON time of the switching element 112 in this manner.

In Fig. 6, the input current is detected such that an electric current going through the registrant 617, which is provided between the input power supply 110 and GND, is taken off by the detecting circuit 607. This may be altered by a time constant detecting circuit 608 provided between the adding and subtracting circuit 603 and the oscillator 606, where the duty ratio of the output of the oscillator 606, because the duty ratio represents the input current. Further, a signal obtained by normalizing the output of the oscillator, by, for example, a registrant and a capacitor, can also be used. It should be noted that the registrant 617 can be inserted at the source side of the switching element 112 to detect the input current therefrom.

Next, a correction for line regulation will be explained. When the input voltage is high, the output voltage also becomes high. In such a case, appropriate correction for line regulation is required. In the sixth embodiment, an input voltage detecting circuit 609 is provided at the downstream side of the input power supply to detect the input voltage; the detected input voltage is added to the output of the demodulating circuit 600b in the adding and subtracting circuit 603. The output of the circuit 603 is modulated in the OFF time controlling circuit 604 to control the operation of the switching element 112.

Instead of the direct detection of the input voltage with the aid of the input voltage detecting circuit 609, the voltage, for example, obtained by rectifying the output of tertiary coil 111a of the first transformer 111 in a forward mode may be used. Any circuit which decreases the duty ratio of the switching element 112 when the power supply voltage becomes high can be used for detecting the input voltage.

The correction for load regulation and line regulation can be applied to control the OFF time of the switching element. That is to say, in a voltage resonate converter, the OFF time of the switching element is constant, however, the optimum OFF time varies depending upon the load current or the input voltage. Therefore, when the variation of the OFF time is corrected in accordance with the input current, time constant, or input voltage, a wider load current and wider input voltage condition can be obtained and therefore more proper resonating operation can be realized.

Further, when the apparatus is arranged as a voltage resonating converter, the tertiary coil 111a of the first transformer 111, i.e. the voltage at the point C, is detected to predict the timing when the voltage of the switching element 112 becomes zero, and then the ON time of the switching element 112 can be controlled by assuming that the predicted timing is the terminated end signal of the OFF time of the switching element 112. It may be possible to add the duty ratio correcting means.

Furthermore, it should be noted that when the above-mentioned correction for load regulation and/or line regulation is conducted, a preferable specification may be obtained by the arrangement such that the demodulation circuit, which is composed of the diode 115 and the capacitor 116. is connected to the tertiary coil 111a of the transformer 111 and then the switching element 112 is controlled by the output of the demodulation circuit. It should be noted that there is no modulation circuit on the secondary side. However, the operation itself of the switching element 112 is a sort of modulation, therefore, the circuit composed of the diode 115 and the capacitor 116 is called as a demodulation circuit here.

It should also be noted that the operation in the modulation circuits, the demodulation circuits and the correcting circuits (for load regulation and/or line regulation) mentioned above can be carried out by using DSP (Digital Signal Processing) technique. Moreover, the modulation method is not limited, so that any one selected from an amplitude modulation, frequency modulation, phase modulation, pulse width modulation, pulse frequency modulation, pulse amplitude modulation, pulse period modulation, pulse code modulation, spread spectrum modulation, quadrature modulation, or a mixture of these modulation methods can be preferably used.

Furthermore, the embodiments explained above use a direct electric power supply 110, however, the present invention can be applied to AC-DC converters where an alternative output is rectified and smoothed.

As explained above, according to the present invention, a highly precise switching control can be realized in switching power supply apparatus where the power is transferred from the primary side to the secondary side in an isolated manner. That is to say, the output on the secondary side can be made correctly to appear on the primary side. Even when a photo coupler is used to return the output on the secondary side to the primary side, the signal is not apt to be influenced by dirt adhering on the surface of the photo coupler or the variation per hour of the photo coupler itself. Further, it is not necessary to provide any starting up circuit. Furthermore, even when the switching control is conducted without modulation on the secondary side, the highly precise control can be obtained by appropriately corrccting the line regulation and/or the load regulation.

## Claims

1. An isolated type switching power supply apparatus which comprises a power supply, a transformer being connected to said power supply, a switching means for switching an electric current going through a primary coil of said transformer so that energy generated on the primary side of said transformer is sent to the secondary side in accordance with the operation of said switching mean, comprising;
a modulating means for modulating an output on the secondary side of said transformer;
a transmitting means for transmitting an output of said modulating means to the primary side of said transformer;
a demodulating means for demodulating the output transferred by said transferring means; and
a switching means controlling circuit for controlling said switching means in accordance with an output of said demodulating circuit;
wherein said switching means controlling circuit is provided at the primary side of said transformer.

2. An isolated type switching power apparatus according to Claim 1, wherein said transferring means is said transformer.

3. An isolated type switching power apparatus according to Claim 1, wherein said transferring means is a photo coupler.

4. An isolated type switching power apparatus according to Claim 1, wherein said transferring means is a second transformer which is provided in a separated manner from said transformer.

5. An isolated type switching power apparatus according to Claim 1, wherein said transferring means is an inductor circuit composed of an inductors provided on said primary and secondary sides, respectively.

6. An isolated type switching power apparatus according to Claim 1, wherein said modulating means comprises a first modulating circuit for modulating an output on said secondary side of said transformer, a second modulating circuit for modulating an output of said first modulating circuit; and wherein said demodulating means comprises a first demodulating circuit for demodulating an output of said second modulating circuit, which is transferred by said transferring means, and a second demodulating circuit for demodulating an output of said first demodulating circuit.

7. An isolated type switching power apparatus according to Claim 1, wherein said apparatus carries out a soft switching operation.

8. An isolated type switching power apparatus according to Claim 1, wherein said apparatus comprises a simultaneous rectifying means using an EFT at the secondary side of the transformer.

9. An isolated type switching power apparatus according to Claim 1, wherein the modulation method conducted in said modulating means is any one selected from the group consisting of an amplitude modulation, a frequency modulation, a phase modulation, a pulse width modulation, a pulse frequency modulation, a pulse amplitude modulation, a pulse period modulation, a pulse code modulation, a spread spectrum modulation, a quadrature modulation, and an mixture thereof.

10. An isolated type switching power supply apparatus which comprises a power supply, a transformer being connected to said power supply, a switching means for switching an electric current going through a primary coil of said transformer so that an energy generated on the primary side of said transformer is sent to the secondary side in accordance with the operation of said switching means to be outputted, comprising:
a controlling means for detecting a magnetic energy appearing on said transformer and controlling an operation of said switching means in accordance with an amount of the thus detected magnetic energy;
a load regulation correcting means for detecting an input electric current of said apparatus and correcting a load regulation of the apparatus in accordance with the detected input electric current, and/or, a line regulation correcting means for detecting an input voltage of said apparatus and correcting a line regulation of the apparatus in accordance with the detected input voltage.

11. An isolated type switching power supply apparatus according to Claim 10, wherein said transformer comprises a tertiary coil on its primary side, and said magnetic energy of said transformer is detected with the aid of said tertiary coil,

12. An isolated type switching power supply apparatus according to Claim 10, wherein a second transformer is provided in a separated manner from said transformer, and said magnetic energy of said transformer is detected with the aid of said second transformer.

13. An isolated type switching power supply apparatus according to Claim 10, wherein said input electric current for correcting a load regulation is detected by detecting a duty ratio of said switching means.

14. An isolated type switching power supply apparatus according to Claim 10, wherein said apparatus carried out a soft switching operation.

15. An isolated type switching power supply apparatus according to Claim 10, wherein said apparatus has a simultaneous rectifying means using an EFT on the secondary side of said transformer.
